# EUROPEAN PATENT SPECIFICATION

(11) **EP 1 725 383 B1**
(45) Date of publication and mention of the grant of the patent: **23.07.2008**
(21) Application number: 05710456.4
(22) Date of filing: 15.02.2005
(51) Int. Cl.: B27M 1/02, B27M 3/34, H04N 5/225

(54) **CASING STRUCTURE OF COMPRESSED WOOD**
GEHÄUSESTRUKTUR AUS PRESSHOLZ
STRUCTURE DE BOITIER EN BOIS COMPRIME

(30) Priority: 03.03.2004 JP 2004059272
(43) Date of publication of application: 29.11.2006
(73) Proprietor: Olympus Corporation, Tokyo 151-0072 (JP)
(72) Inventor: SUZUKI, Tatsuya, Setagaya-ku, Tokyo 1560055 (JP)
(74) Representative: Kuhnen & Wacker
(86) International application number: PCT/JP2005/002674
(87) International publication number: WO 2005/084898

(56) References cited:
- US-A1- 2004 022 036
- DATABASE WPI Section PQ, Week 198839 Derwent Publications Ltd., London, GB; Class P63, AN 1988-276897 XP002330077 -& SU 1 380 952 A (VORON FORESTRY INST) 15 March 1988 (1988-03-15)
- PATENT ABSTRACTS OF JAPAN vol. 1999, no. 08, 30 June 1999 (1999-06-30) -& JP 11 077619 A (TANAHASHI MITSUHIKO), 23 March 1999 (1999-03-23) cited in the application
- PATENT ABSTRACTS OF JAPAN vol. 1996, no. 05, 31 May 1996 (1996-05-31) -& JP 08 025301 A (YOKOI SHOTEN:GOUSHI), 30 January 1996 (1996-01-30) cited in the application

## Description

The present invention relates to a casing structure using compressed wood, and more particularly, to a casing structure which is composed of a mutual combination of a plurality of compressed wood pieces and has a space formed between the respective compressed wood pieces to hold electronic device or other arbitrary object therein.

### BACKGROUND ART

From SU 1380952 A1 there is known a process for manufacturing a wooden shell bearing. The process comprises fitting wooden shells with the grain running radially in a casing of natural wood with concentric disposition of grain and pressing them together. The shells are made in the form of segments (2) with a radius the same as that of the bearing. The joint pressing is done simultaneously by compacting the casing along the grain and the shells across the grain. The pressing force is directed on to the endface of the casing and shells along the axis of the bearing.

Conventionally, light metals (for example, aluminum, stainless steel, titanium, and magnesium) and synthetic resins (for example, acrylonitrile-butadiene-styrene (ABS), polycarbonate, and acrylic resins) are used as a material of a casing for electronic device (for example, a digital camera, a mobile phone, and an IC recorder). A casing formed of the above materials has a relatively smallexpansion/contraction rate to a temperature change and other external pressures, and the expansion/contraction rate thereof is approximately the same in all directions since such a casing is isotropic. However, when the casing is evaluated as an exterior packaging member, the casing is disadvantageous in that it has no individual characteristics because it has almost no individual difference. Further its design property is deteriorated because scratches and discoloring occur over a long term use.

To solve the above problems, the inventor has conceived of forming a casing with wood. The use of woo d is advantageous in that it can provide an appropriate individual difference because of grains that differ from one another and further in that the change of surface color over a long term use serves to enhance a design property. However, when wood is used as the casing material as described above, the rigidity of the casing may not be good enough compared with the casings of the light metal and the synthetic resin. Although the thickness of the casing may be increased to compensate the deterioration of the rigidity, this is not suitable for a casing for electronic device in which downsizing is particularly required.

One conventionally known method to improve the strength of wood material is compression processing. According to the method, wood is softened through water absorption and compressed while being fixed in a predetermined shape, and sliced in a direction of compression to be a plate-like primary fixed product. Subsequently, the primary fixed product is shaped into a product with a predetermined three-dimensional shape while being heated and made to absorb water, and fixed in the predetermined three-dimensio nal shape to be a final product (see, for example, Japanese Patent N o. 3078452). According to another known method, softened wood is compressed and fixed (see, for example, Japanese Patent Application Laid-Open No. 11-77619). Accordingly, when these methods are used, the strength of wood might be enhanced without the increase in wall thickness.

### DISCLOSURE OF THE INVENTION

### Problems to be Solved by the Invention

However, in some cases, a mere compression processing of each wooden pieces would not secure the rigidity of a casing as a whole. Most casings for an electronic device are composed of plural pieces of compressed wood joined with each other. Accordingly, even if the rigidity of the individual pieces of compressed wood is improved, the rigidity of the casing as a whole may not be secured if the assembly structure of the pieces of compressed wood is not appropriate.

For example, a casing might be formed of a pair of compressed wood pieces, of which fiber directions are arranged to be parallel to each other. Then, when a load is applied to the casing in a direction in which one piece of compressed wood has the lowest strength with respect to the wood fiber direction thereof (the direction orthogonal to the wood fiber direction), the load is also applied to the other piece in a direction in which the other piece has the lowest strength with respect to the wood fiber direction thereof because the wood fiber directions of the pair of compressed wood pieces are parallel with each other. Accordingly, since the load is applied to both compressed wood pieces in the weakest directions thereof, the casing as a whole might not be able to bear the load. Then, the casing might be deformed to generate gaps between the compressed wood pieces. Further, if excessive stress is applied to the junction of two pieces, cracks or other damages might be caused along the junction.

When an electronic device includes a high voltage unit (for example, an electronic flash unit in a digital camera), it may be difficult to insulate the high voltage unit from the exterior of the device. In particular, when the gaps are generated in the casing, a creepage distance for insulation (shortest distance along a surface of an insulator between two conductive components) is shortened between the high voltage unit and the exterior of the device, which is not preferable because it may make it difficult to secure a predetermined creepage distance for insulation regulated by a safety standard.

### Means for Solving the Problems

The present invention has been achieved in order to solve the above problems. An object of this invention is to provide a casing structure of compressed wood with improved overall rigidity through an appropriate combination of the compressed wood pieces.

The object is attained by a casing structure according to claim 1. Further developments of the invention are specified in the dependent claims.

### Effect of the Invention

In the casing structure of the compressed wood according to the present invention, a load applied to a casing can be received by the pair of compressed wood pieces each having wood fibers in a different direction. Therefore, the load can be firmly received by at least one of the compressed wood pieces, whereby the overall rigidity of the casing of the compressed wood is improved.

In the casing structure of the compressed wood according to the present invention, even if a load is applied to one of the compressed wood pieces in the weakest direction thereof, since the load is applied to the other compressed wood piece in the strongest direction thereof, the load can be firmly received by the other compressed wood piece. Therefore, the overall rigidity of the casing of the compressed wood is improved.

In the casing structure of the compressed wood according to an embodiment of the present invention, even if a detachable unit is provided in a part of the compressed wood piece, the wood fiber direction of the detachable unit can be matched with the wood fiber direction of the compressed wood piece on which the detachable unit is detachably mounted. Therefore, wood fiber directions suitable for improving the rigidity of the casing of the compressed wood can be maintained.

### BRIEF DESCRIPTION OF THE DRAWINGS

Fig. 1 is a perspective view of an electronic device using a casing structure of compressed wood according to an embodiment;
Fig. 2 is an exploded perspective view of the electronic device shown in Fig. 1;
Fig. 3 is a sectional view of the electronic device taken along a line A-A indicated by arrows of Fig. 1;
Fig. 4 is a perspective view that conceptually depicts a main surface portion;
Fig. 5 is an enlarged sectional view of a joint portion of Fig. 3;
Fig. 6 is a perspective view that depicts a joint structure;
Fig. 7 is a perspective view of shaping of a wood piece for a front panel according to a first embodiment;
Fig. 8 is a perspective view of shaping of a wood piece for a rear panel according to the first embodiment;
Fig. 9 is a plan view of shaping of a wood piece according to the first embodiment;
Fig. 10 is a perspective view that depicts a compression process of the wood piece according to the first embodiment;
Fig. 11 is a longitudinal sectional view that sequentially depicts respective compression processes of the wood piece according to the first embodiment;
Fig. 12 is a longitudinal sectional view that sequentially depicts respective compression processes of the wood piece according to the first embodiment;
Fig. 13 is a longitudinal sectional view that sequentially depicts respective compression processes of the wood piece according to the first embodiment;
Fig. 14 is a perspective view of an electronic device using a casing structure of compressed wood according to a second embodiment when the electronic device is viewed from a rear surface direction;
Fig. 15 is an exploded perspective view of the electronic device when a battery cover is removed;
Fig. 16 is a perspective view of an electronic device using a casing structure of compressed wood according to a third embodiment when the electronic device is viewed from a rear surface direction; and
Fig. 17 is an exploded perspective view of the electronic device when a battery cover is removed.

Exemplary embodiments of a casing structure of compressed wood according to the present invention are explained below with reference to the drawings. The present invention is by no means limited by the embodiments.

### (First Embodiment)

A casing structure of the compressed wood according to a first embodiment of the present invention will be explained. In general, the main features of the casing structure according to the first embodiment reside in that: (1) the casing structure is used to hold a predetermined object between a pair of compressed wood pieces; each of the compressed wood pieces has a main surface portion and side surface portions formed integrally along the entire peripheral edges of the main surface portion in a direction not parallel to the main surface portion; and the wood fiber directions in the main surface portions of the compressed wood pieces are substantially asymmetrical with respect to the opposing surface between the compressed wood pieces; and that (2) the wood fiber direction is the main surface portion of one of the compressed wood pieces is approximately orthogonal to the wood fiber direction in the main surface portion of the other compressed wood piece opposing to the above compressed wood piece.

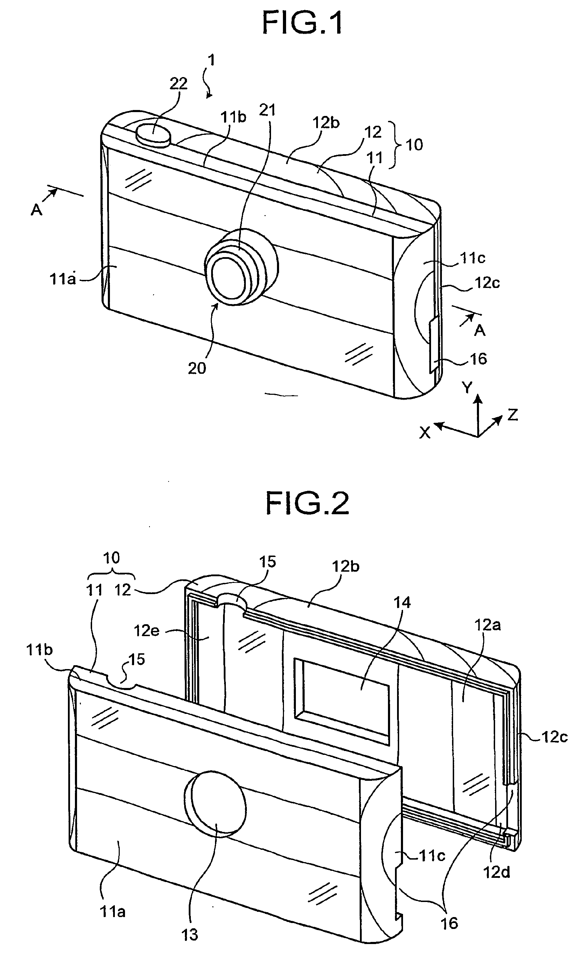

Fig. 1 is a perspective view of an electronic device using the casing structure of the compressed wood according to the first embodiment. In Fig. 1, the electronic device 1 is a digital camera including a casing 10 and an electronic unit 20. The casing 10 accommodates the electronic unit 20 as an object to be held in a holding space formed therein. The casing 10 holds the electronic unit 20 integrally therein as well as protects the electronic unit 20 from the outside of the casing 10. The casing 10 also serves as an exterior packaging member of the electronic device 1 through exposing the outer surface thereof to the outside.

The electronic unit 20 causes the electronic device 1 to implement necessary electronic functions and includes, for example, an imaging lens 21, a shutter button 22, a liquid crystal monitor, an image pickup device, a drive circuit for various devices, and terminals to be connected to external equipment. Fig. 1 depicts only the imaging lens 21 and the shutter button 22 among the components of the electronic unit 20.

As shown by arrows in Fig. 1, in the following explanation, a direction X along the long side of the electronic device 1 is called a longitudinal direction, a direction Y along a short side of the electronic device 1 and orthogonal to the longitudinal direction of the electronic device 1 is called a lateral direction, and a direction Z orthogonal to the longitudinal direction and the lateral direction is called a thickness direction. A dimension of the electronic device in the longitudinal direction is called a long size, a dimension thereof in the lateral direction is called a short size, and a dimension thereof in the thickness direction is called a thickness. The wood fiber direction is a direction in which a wood grows in a wood growing process (direction from a root of the wood to an extreme end thereof), that is, a direction which is substantially parallel with a flat grain surface and a straight grain surface, and substantially orthogonal to an end grain surface. Grain is generally a visible pattern formed by the gradation of wood fiber density. However, the term "grains" used herein indicates a distribution of wood fiber densities irrespective of the visibility.

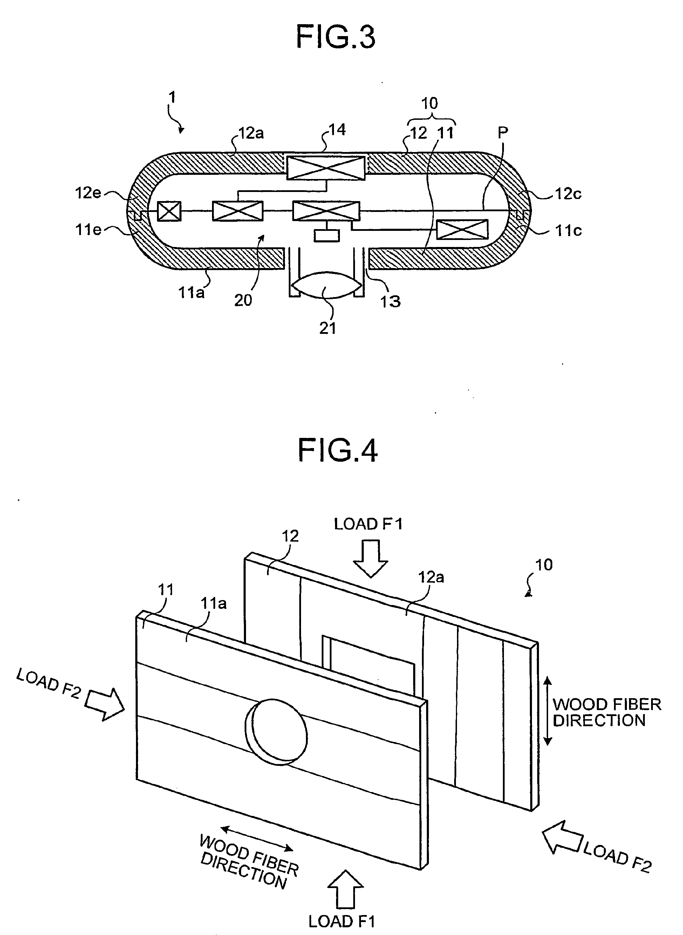

A specific structure of the casing 10 will be explained. Fig. 2 is an exploded perspective view of the electronic device 1 shown in Fig. 1, and Fig. 3 is a sectional view of the electronic device 1 shown in Fig. 1 taken along the line A-A of Fig. 1. The electronic unit 20 is not shown in Fig. 2. As shown in the respective figures, the casing 10 is composed of the compressed wood pieces combined with each other. In the first embodiment, the casing 10 is composed of a combination of a pair of compressed wood pieces, that is, a front panel 11 and a rear panel 12.

The front panel 11 and the rear panel 12 are formed and processed into a shape corresponding to the shape of the object to be held therein. In particular, the front panel 11 has a lens hole 13 for exposing the imaging lens 21 to the outside, and the rear panel 12 has a monitor hole 14 for exposing the liquid crystal monitor. Further, the front panel 11 and the rear panel 12 have a shutter hole 15 for exposing the shutter button 22 and a terminal hole 16 for allowing the connection terminal to be connected to the external equipment, respectively.

The front panel 11 has a flat main surface portion 11 a and side surface portions 11b to 11e formed around the peripheral edges of the main surface portion 11a, and the rear panel 12 has a flat main surface portion 12a and side surface portions 12b to 12e formed around the peripheral edges of the main surface portion 12a. The side surface portions 11 b to 11e and 12b to 12e are formed around all the peripheral edges of the main surface portions 11a and 12a, respectively. Since the main surface portions 11a and 12a are formed in a square shape and have the peripheral edges in four directions, the side surface portions 11 b to 11e and 12b to 12e are formed around the four peripheral edges of the main surface portions 11a and 12a, respectively.

The side surface portions 11 b to 11e and 12b to 12e are formed non-parallel with the main surface portions 11a and 12a, respectively. Specifically, the side surface portions 11 b to 11e of the front panel 11 are arranged to rise toward the rear panel 12, and the side surface portions 12b to 12e of the rear panel 12 are arranged to rise toward the front panel 11. The angles between the main surface portions 11a and the side surface portions 11b to 11e and the angles between the main surface portions 12a and the side surface portions 12b to 12e can be set to arbitrary angles other than zero degree as long as they are non-parallel with each other. In the first embodiment, the side surface portions 11 b to 11e and 12b to 12e are substantially orthogonal to the main surface portions 11a and 12a, respectively.

In particular, the side surface portions 11 b to 11e and 12b to 12e are formed integrally with the main surface portions 11a and 12a, respectively. In other words, the side surface portions 11 b to 11e and 12b to 12e are formed while continuously bending the wood fibers which are contained in the main surface portions 11a and 12a, in a non-parallel state therewith, respectively, by the pressure applied by a press or the like so that the wood fibers are not made discontinuous. In this regard, the casing 10 is essentially different from a conventional wooden box, a canoe which is formed by scraping, or the like.

The wood fiber directions of the front and rear panels 11 and 12 will be explained. When an imaginary opposing surface P interposed between the front panel 11 and the rear panel 12 is set as shown in Fig. 3, the wood fiber directions of the main surface portion 11 a and side surface portions 11b to 11e are approximately asymmetrical with the wood fiber directions of the main surface portion 12a and the side surface portions 12b to 12e, respectively, with respect to the opposing surface P. Specifically, as to the front panel 11, the respective wood fibers of the main surface portions 11 a and the side surface portions 11 b to 11e are oriented along the longitudinal direction. On the other hand, as to the rear panel 12, the respective wood fibers of the main surface portions 12a and the side surface portions 12b to 12e are oriented along the lateral direction. In other words, the surfaces which confront with each other, that is, the main surface portions 11 a and 12a, the side surface portions 11 b and 12b, the side surface portions 11c and 12c, the side surface portions 11d and 12d, and the side surface portions 11e and 12e, are formed to have the wood fibers along a different direction.

In particular, in the first embodiment, the wood fiber direction in the main surface portion 11a of the front panel 11 is approximately orthogonal to that in the main surface portion 12a of the rear panel 12. The wood fiber direction of the main surface portion 11a is approximately parallel with the longitudinal direction, whereas the wood fiber direction of the main surface portion 12a is approximately orthogonal to the longitudinal direction (approximately parallel with the lateral direction). (Note that, in Fig. 3, though the cross sections of the front panel 11 and the rear panel 12 are shown by hatching, they do not denote either actual wood fibers or actual grains.) A method of forming the front and rear panels 11 and 12 as described above will be explained later.

An effect of disposing the wood fiber directions asymmetrically as described above will be explained. Fig. 4 is a perspective view that conceptually depicts the main surface portions 11a and 12a. Since the main surface portions 11a and 12a are members that affect the rigidity of the casing 10 most, only the main surface portions 11 a and 12a are shown in Fig. 4. It is generally known that as for the strength of a wood it gets lower in the order of tensile strength, bending strength, compressive strength, and shear strength.

First, it is assumed that a load F1 is applied to the casing 10 from the directions shown by arrows. In this case, since the load F1 is approximately orthogonal to the wood fiber direction of the main surface portion 11a, a shear load is applied to the wood fibers in the main surface portion 11a (when both ends of the wood fibers are assumed to be fixed). Since the load F1 is approximately parallel with the wood fiber direction of the main surface portion 12a, a compressive load is applied to the wood fibers in the main surface portion 12a. Since the relation that compressive strength is higher than shear strength holds as described above, even if the load F1 cannot be sufficiently held by the main surface portion 11 a, the load F1 can be held by the main surface portion 12a.

Next, it is assumed that a load F2 is applied to the casing 10 from the directions shown by arrows (directions approximately orthogonal to those of the load F1). In this case, since the load F2 is approximately parallel with the wood fiber direction of the main surface portion 11 a, a compressive load is applied to the wood fibers in the main surface portion 11 a. Since the load F2 is approximately orthogonal to the wood fiber direction of the main surface portion 12a, a shear load is applied to the wood fibers in the main surface portion 12a (when both ends of the wood fibers are assumed to be fixed). Since the relation that compressive strength is higher than shear strength holds as described above, even if the load F2 cannot be sufficiently held by the main surface portion 12a, the load F2 can be held by the main surface portion 11a.

As can be seen from the foregoing, the overall rigidity of the casing 10 can be improved because the load applied to the casing can be received by at least one of the main surface portion 11a and the main surface portion 12a. In particular, in the first embodiment, since the wood fiber direction in the main surface portion 11 a is approximately orthogonal to that in the main surface portion 12a, the above effect can be exhibited at the maximum. However, it is sufficient that the wood fiber directions of the main surface portions 11a and 12a be asymmetrical with each other, and the wood fiber direction in the main surface portion 11 a need not be necessarily approximately orthogonal to that in the main surface portion 12a.

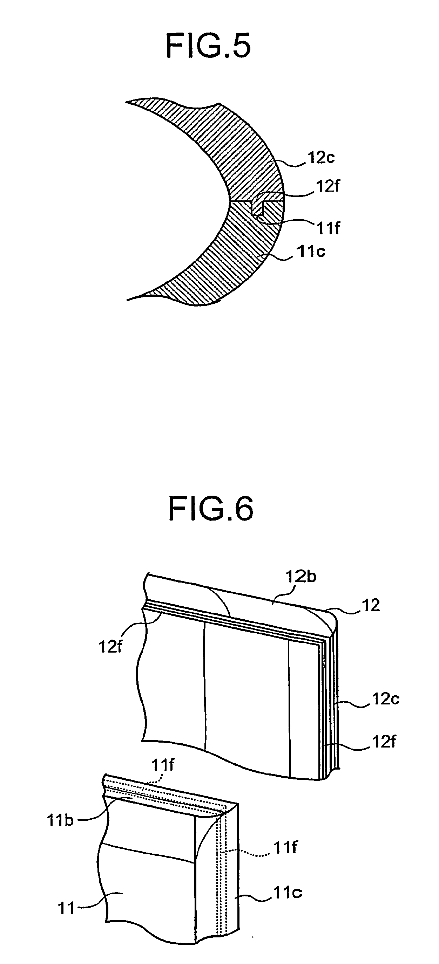

A joint structure of the front panel 11 and the rear panel 12 is explained next. Fig. 5 is an enlarged sectional view of a joint portion shown in Fig. 3, and Fig. 6 is a perspective view of the joint structure. As shown in Figs. 5 and 6, a tenon portion 12f is formed around the entire periphery of the surface of the rear panel 12 facing the front panel 11. On the other hand, a mortise portion 11f, which has a shape corresponding to the tenon portion 12f, is formed around the entire periphery of the surface of the front panel 11 facing the rear panel 12. The front panel 11 is joined to the rear panel 12 through the insertion of the tenon portion 12f into the mortise portion 11f. Note that any joint structure may be employed between the front and rear panels 11 and 12, and a water-proof structure using a rubber packing may be employed.

A method of forming the front and rear panels 11 and 12 will be explained.

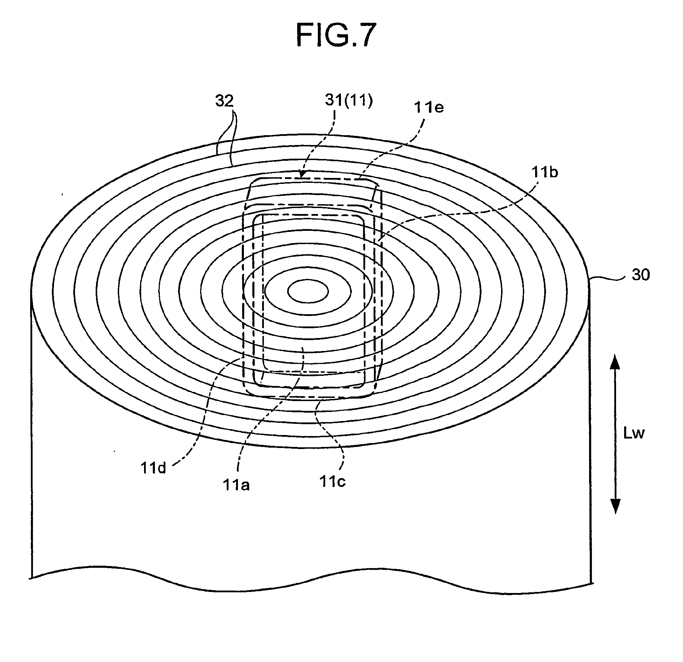

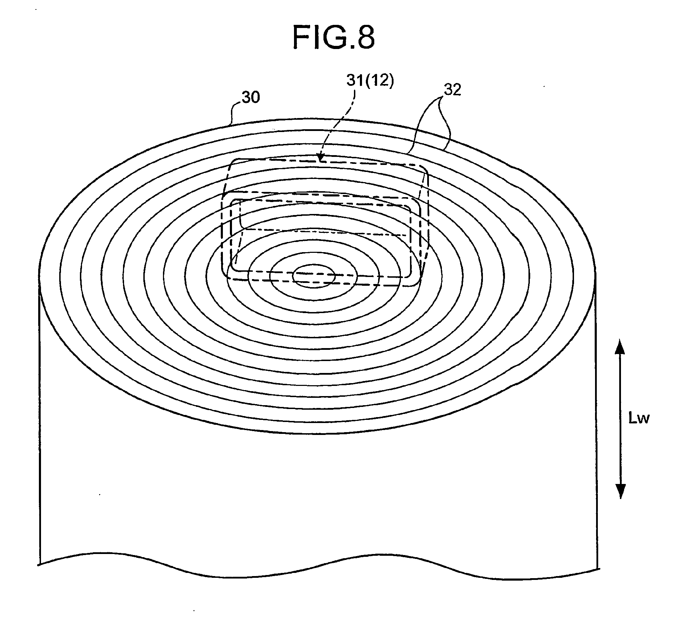

Fig. 7 is a perspective view of shaping of the wood piece for a front panel according to the first embodiment, and Fig. 8 is a perspective view of shaping of the wood piece for a rear panel according to the first embodiment. As shown in Figs. 7 and 8, a wood piece 31 is taken in a desired shape from an uncompressed raw wood 30. In Figs. 7 and 8, the grains of the raw wood 30 are denoted by reference numeral 32.

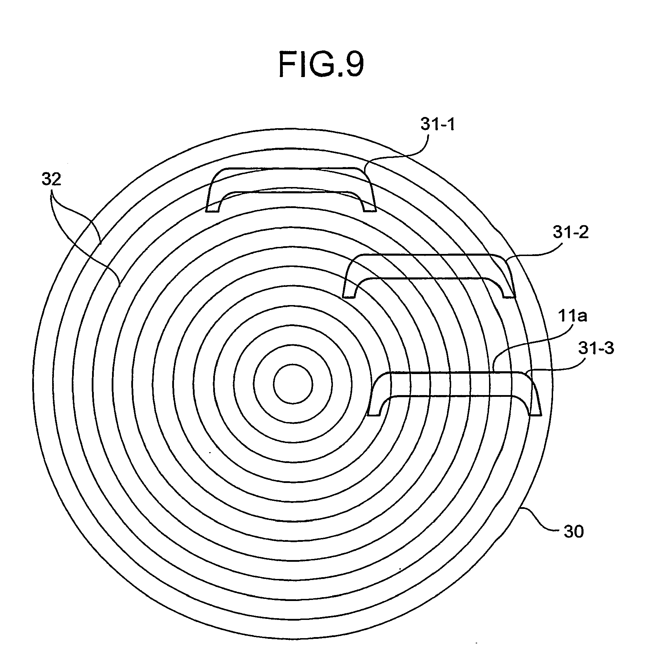

Fig. 9 is a plan view of shaping of a wood piece according to the first embodiment. As shown in Fig. 9, a wood piece 31-1, a wood piece 31-2, and a wood piece 31-3 can be taken as the wood piece 31 from the raw wood 30 according to a position with respect to the grain 32. In the first embodiment, the wood piece 31 for forming the front panel 11 is shaped at the position of the wood 31-1 shown in Fig. 9 so that the longitudinal direction thereof extends along a wood fiber direction Lw of the raw wood 30 as shown in Fig. 7. Further, the wood piece 31 for forming the rear panel 12 is shaped at the position of the wood piece 31-1 shown in Fig. 9 so that the longitudinal direction thereof extends in a direction approximately orthogonal to the wood fiber direction Lw of the raw wood 30 as shown in Fig. 8. Since the front and rear panels 11 and 12 can be formed in the same manner in the subsequent processes, the method of forming the front panel 11 alone is explained below.

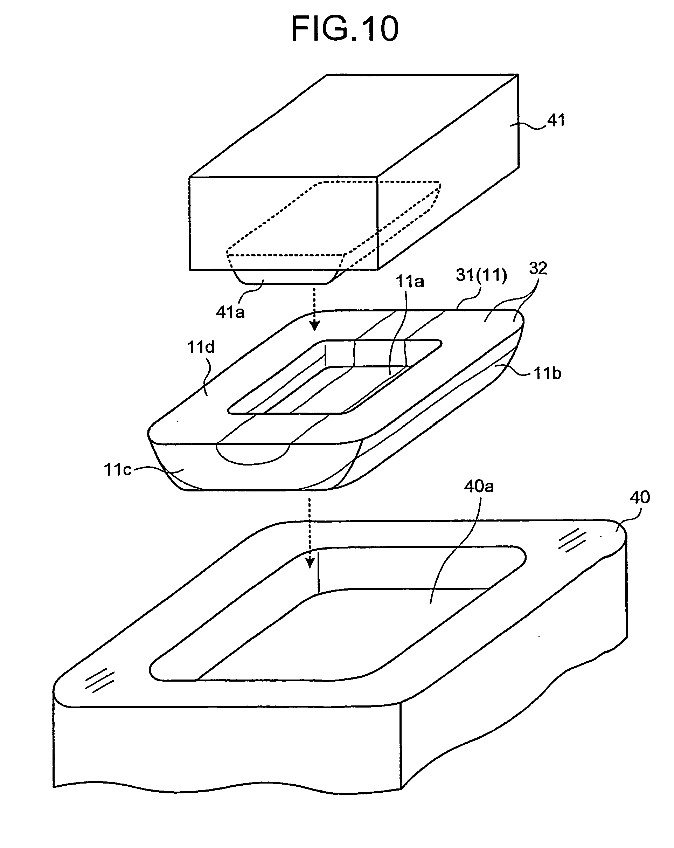

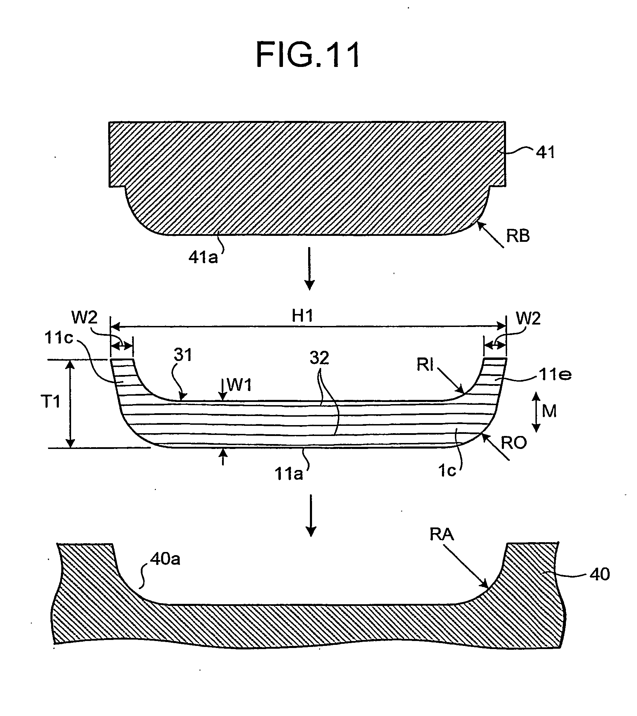

Fig. 10 is a perspective view of a compression process of the wood piece according to the first embodiment, and Figs. 11 to 13 are longitudinal sectional views that sequentially depict respective compression processes of the wood piece according to the first embodiment. To briefly explain, the front panel 11, which includes the main surface portion 11a and the side surface portions 11b to 11e integrally therewith, is formed through the pressing of the wood piece 31 between a lower mold frame 40 and an upper mold frame 41 as shown in Fig. 10.

A shape of the wood piece 31 is explained first. The wood piece 31 is lumbered in a shape to which the volume of the wood piece 31 to be reduced by compression is previously added. Specifically, as shown in Fig. 11, the main surface portion 11a is shaped so as to have a thickness W1 to which the volume thereof reduced by compression is previously added, and the side surface portions 11b to 11e are shaped so as to have a thickness W2 and a height T1 to which the volume thereof reduced by compression is previously added, respectively. The front panel 11 is shaped to have a width H1 as a whole. The thickness W1 of the main surface portion is made larger than the thickness W2 of the side surface portions.

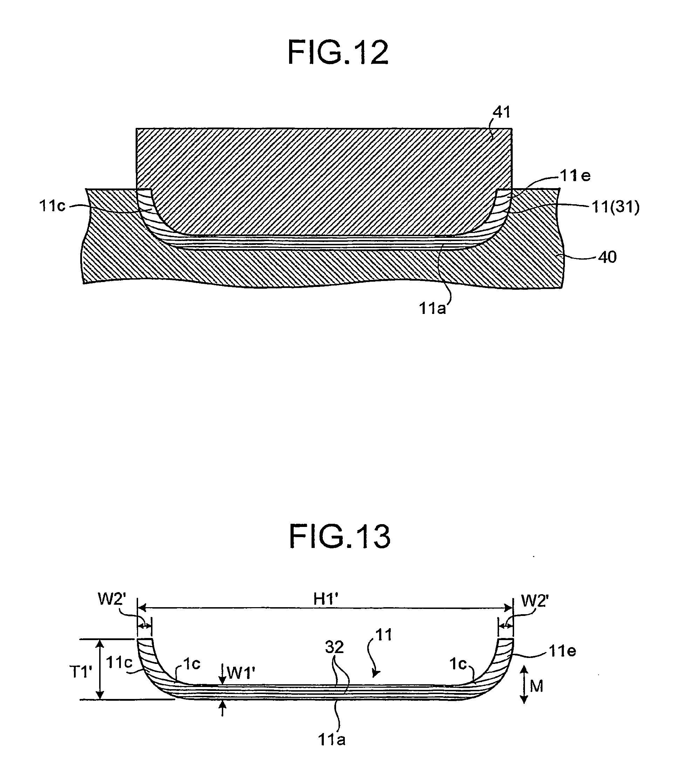

The relation between the shape of the wood piece 31 and the shapes of the lower and upper mold frames 40 and 41 is explained next. As shown in Figs. 11 to 13, the relation between the radius of curvature of an outside curved surface RO of the wood piece 31 and the radius of curvature of a curved surface RA of a concave portion 40a of the lower mold frame 40 opposing the curved surface RO is shown by RO>RA. On the other hand, the relation between the radius of curvature of a curved surface RI of the wood piece 31 and the radius of curvature of a curved surface RB of a convex portion 41a of the upper mold frame 41 is shown by RI>RB. Further, as shown in Fig. 12, a space which is formed between the lower mold frame 40 and the upper mold frame 41 when they are combined with each other, has a shape corresponding to the shape of the front panel 11 after the compression of the wood piece 31.

A specific forming method is explained next. First, as shown in Fig. 11, the wood piece 31 is placed between the lower mold frame 40 and the upper mold frame 41. At the same time, the wood piece 31 is placed in a water vapor atmosphere of high temperature and high pressure for a predetermined time so that it is softened by excessive absorption of moisture. Next, as shown in Fig. 12, the upper mold frame 41 is fitted into the lower mold frame 40 to compress the wood piece 31. Then, the wood piece 31 is left as it is for a predetermined period of time in a state that a compression force is applied thereto. Finally, the wood piece 31 is released from the water vapor atmosphere of high temperature and high pressure, and the thus formed front panel 11 is taken out by separating the upper mold frame 41 from the lower mold frame 40 as shown in Fig. 13. The taken-out front panel 11 has been compressed so that the main surface portion 11 a and the side surface portions 11 b to 11e have substantially uniform thicknesses W1' and W2', respectively, and the side surface portions 11 b to 11e have a height T1'. Further, curved portions 1 c are compressed obliquely. The front panel 11 is compressed to have a width H1' as a whole. The front panel 11, which is formed by compression as described above, is provided with a high strength in its entirety because the fiber density thereof is increased.

### (Second Embodiment)

A second embodiment of the casing structure of the compressed wood according to the present invention is explained next. A main feature of the second embodiment is such that a part of a compressed wood piece is formed as a detachable unit that is detachably mounted on the compressed wood piece, and the wood fiber direction of the detachable unit is substantially in coincidence with that of the compressed wood piece on which the detachable unit is mounted, in addition to the features of the first embodiment. Note that a structure and a method of the second embodiment are the same as those of the first embodiment described above unless explained otherwise, and like reference numerals designate like components as those of the first embodiment.

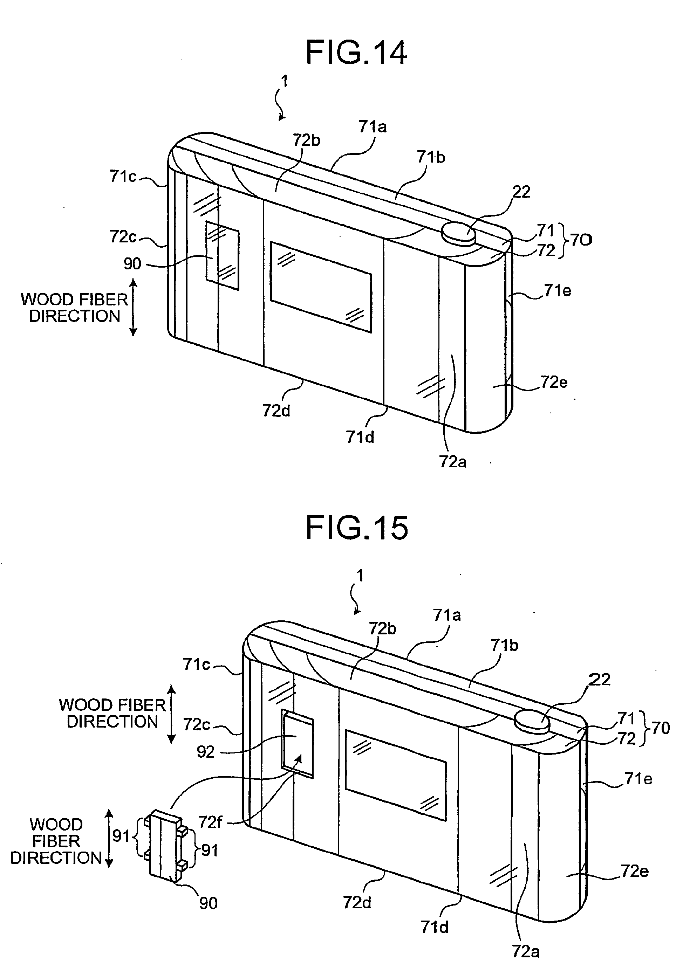

Fig. 14 is a perspective view from the back of an electronic device using the casing structure of the compressed wood according to the second embodiment, and Fig. 15 is an exploded perspective view of the electronic device when a battery cover is removed. As shown in the drawings, a casing 70 is composed of a pair of compressed wood pieces, that is, a front panel 71 and a rear panel 72 combined with each other.

The front panel 71 has a flat main surface portion 71a and side surface portions 71 b to 71e integrally formed around the four peripheral edges of the main surface portion 71a non-parallel therewith, and the rear panel 72 has a flat main surface portion 72a and side surface portions 72b to 72e integrally formed around the four peripheral edges of the main surface portion 72a non-parallel therewith. The wood fiber directions of the main surface portions 71 a and 72a and the side surface portions 71 b to 71 e and 72b to 72e are substantially asymmetrical with respect to an opposing surface P (not shown) between the front and rear panels 71 and 72.

The rear panel 72 is provided with a battery cover 90 as a detachable unit which is detachably mounted thereon. A part of the main surface portion 72a of the rear panel 72 is cut in square to form the battery cover 90. The battery cover 90 is detachable from the main surface portion 72a by locking/unlocking of locking portions 91 formed on both sides of the battery cover 90 to/from the side edges of an opening 72f of the main surface portion 72a. A known structure can be employed as a specific locking structure. A battery 92 can be replaced by detaching the battery cover 90 from the main surface portion 72a as shown in Fig. 15.

The wood fiber direction of the battery cover 90 is approximately the same as the wood fiber direction of the main surface portion 72a on which the battery cover 90 is detachably mounted. In other words, as shown by an arrow in Fig. 14, the battery cover 90 is formed and disposed so that the wood fiber direction of the battery cover 90 is approximately the same as the lateral direction of the main surface portion 72a. Accordingly, since the main surface portion 72a and the battery cover 90 maintain the same wood fiber direction, the casing structure according to the second embodiment can improve the rigidity of a casing like that according to the first embodiment.

### (Third Embodiment)

A third embodiment of the casing structure of the compressed wood according to the present invention is explained next. A main feature of the third embodiment is such that the wood fiber direction of a detachable unit is substantially in coincidence with that of the compressed wood piece on which the detachable unit is mounted like the second embodiment. Note that a structure and a method of the third embodiment are the same as those of the second embodiment described above unless explained otherwise, and like reference numerals designate like components as those of the second embodiment.

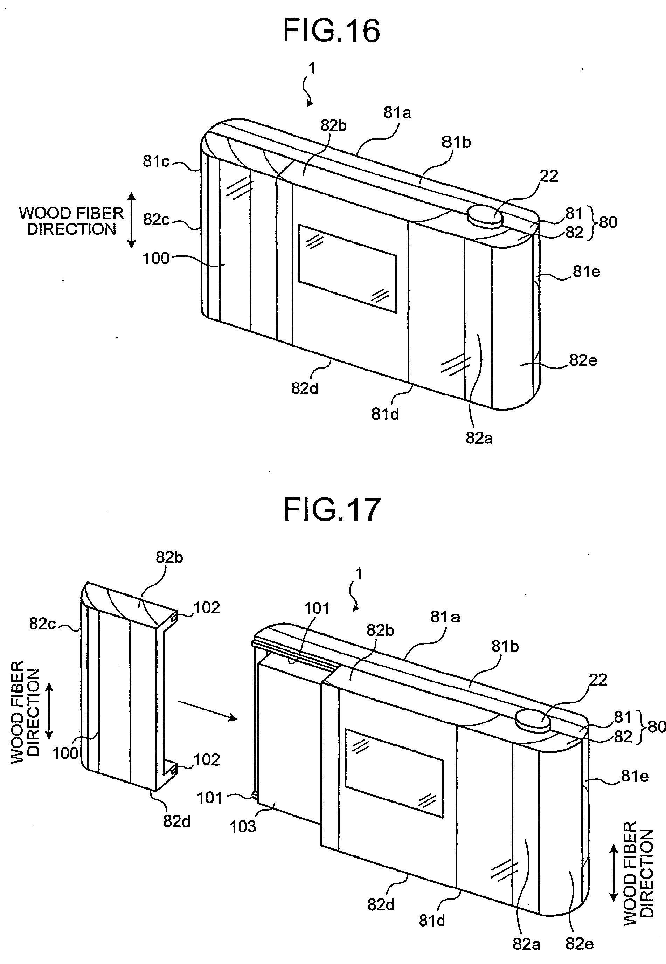

Fig. 16 is a perspective view of an electronic device using the casing structure of the compressed wood according to the third embodiment as viewed from the rear surface direction, and Fig. 17 is an exploded perspective view of the electronic device when the battery cover is removed. As shown in the drawings, a casing 80 is composed of a pair of compressed wood pieces, that is, a front panel 81 and a rear panel 82 combined with each other.

The front panel 81 has a flat main surface portion 81 a and side surface portions 81b to 81e integrally formed around the four peripheral edges of the main surface portion 81 a non-parallel therewith, and the rear panel 82 has a flat main surface portion 82a and side surface portions 82b to 82e integrally formed around the four peripheral edges of the main surface portion 82a non-parallel therewith. The wood fiber directions of the main surface portions 81a and 82a and the side surface portions 81b to 81 e and 82b to 82e are substantially asymmetrical with respect to an opposing surface P (not shown) between the front and rear panels 81 and 82.

The rear panel 82 is provided with a battery cover 100 as a detachable un it detachably mounted thereon. One end of the rear panel 82 is divided to form the battery cover 100. In particular, the battery cover 100 is composed of parts of the main surface portion 82a and the side surface portions 82b and 82d of the rear panel 82 and the entire side surface portion 82c thereof.

A tenon portion 101 is formed on the surface of the front panel 81 facing the battery cover 100, and a mortise portion 102 having a shape corresponding to that of the tenon portion 101 is formed on the surface of the battery cover 100 facing the front panel 81. The battery cover 100 can be mounted as shown in Fig. 16 by sliding it while inserting the tenon portion 101 into the mortise portion 102. A known structure can be employed as a specific mounting structure. A battery 103 can be replaced by detaching the battery cover 100 from the rear panel 82 as shown in Fig. 17.

The wood fiber direction of the battery cover 100 is approximately the same as the wood fiber direction of the rear panel 82. In other words, the battery cover 100 is formed and disposed so that the wood fiber direction thereof is approximately the same as the lateral direction of the rear panel 82. Accordingly, since the main surface portion 82 and the battery cover 100 maintain the same wood fiber direction. The casing structure according to the third embodiment can improve the rigidity of a casing like that according to the first embodiment.

Finally, a possibility of modifying the above embodiments is explained. The specific structures and methods of the above embodiments according to the present invention described above can be arbitrarily modified and improved within the inventive concept in the appended claims.

For example, the electronic device is not limited to the digital camera described above and may be arranged as a mobile phone, an IC recorder, a personal digital assistant (PDA), a portable television, a portable radio, a remote controller for various home electric appliances. In the above explanation, the terms such as "parallel" and "orthogonal" are used to describe the structure. These descriptions, however, do not mean strictly parallel and orthogonal, and the structures described as such may be non-parallel and non-orthogonal to an extent that would allow the structures to exert the advantageous function of the invention. In particular, since wood, which is a natural material is used in the structures, at least an error which may occur in an ordinary processing of wood is permitted. Further, the sizes and the rates of the various portions explained in the particular embodiments are only examples, and the respective portions may be formed to have any arbitrary sizes and rates different from those described above. The method of forming the compressed wood piece is not limited to the method explained above, and, for example, compression and forming of upwardly curved side surface portions may be simultaneously performed on a wood piece which is cut off in a flat shape, through the application of pressure thereon between the mold frames. Alternatively, the wood may be compressed in a direction other than the direction described above or may be compressed from a plurality of directions.

Further, the casing may be formed by indirectly combining the compressed wood pieces, except by directly combining them. For example, the compressed wood pieces may be combined with each other with other metal or resin member fitted therebetween. Further, the detachable unit detachably mounted on the compressed wood piece is not limited to the battery cover as described in the second and the third embodiments, and it may be arranged as a detachable unit for achieving an arbitrary function.

## Claims

1. A casing structure (1) of compressed wood that holds a predetermined object between a first compressed wood piece (11) and a second compressed wood piece (12), wherein
the first compressed wood piece (11) has a first main portion (11a) formed in a substantially square shape and a first side portion (11b, 11c, 11d, 11e) formed integrally around four peripheral edges of the first main portion (11a) and non-parallel with the first main portion (11a),
the second compressed wood piece (12) has a second main portion (12a) formed in a substantially square shape and a second side portion (12b, 12c, 12d, 12e) formed integrally around four peripheral edges of the second main portion (12a) and non-parallel with the second main portion (12a), and
the wood fiber direction in the first main portion (11a) and the wood fiber direction in the second main portion (12a) are substantially asymmetrical with respect to a plane (P) between the first main portion and the second main portion, the plane (P) extending through a joint portion between the first compressed wood piece (11) and the second compressed wood piece (12).

2. The casing structure of compressed wood according to claim 1, wherein the wood fiber direction of the first main portion (11a) is substantially orthogonal to the wood fiber direction in the second main portion (12a).

3. The casing structure (1) of compressed wood according to claim 1, wherein the wood fiber direction in the first side portion (11b, 11c, 11d, 11e) and the wood fiber direction in the second side portion (12b, 12c, 12d, 12e) are substantially asymmetrical with respect to the plane.

4. The casing structure (1) of compressed wood according to any one of claims 1 to 3, wherein
a part of the first and the second compressed wood piece (71; 72) is formed as a detachable unit (91) detachably mounted on that compressed wood piece (71; 72), and
the wood fiber direction of the detachable unit is substantially in coincidence with the wood fiber direction of that compressed wood piece (71; 72) on which the detachable unit (91) is mounted.

## Patentansprüche

1. Gehäusestruktur (1) aus Pressholz, die einen vorgegebenen Gegenstand zwischen einem ersten Presszholzstück (11) und einem zweiten Pressholzstück (12) hält, wobei
das erste Pressholzstück (11) einen ersten Hauptabschnitt (11a) aufweist, der in einer im Wesentlichen rechteckigen Form ausgebildet ist, und einen ersten Seitenabschnitt (11b, 11c, 11d, 11e), der einstückig um die vier Außenränder des ersten Hauptabschnitts (11a) herum und nicht parallel zum ersten Hauptabschnitt ausgebildet ist,
das zweite Pressholzstück (12) einen zweiten Hauptabschnitt (12a) aufweist, der in einer im Wesentlichen rechteckigen Form ausgebildet ist, und einen zweiten Seitenabschnitt (12b, 12c, 12d, 12e), der einstückig um die vier Außenränder des zweiten Hauptabschnitts (12a) und nicht parallel zum zweiten Hauptabschnitt (12a) ausgebildet ist, und
die Holzfaserrichtung im ersten Hauptabschnitt (11a) und die Holzfaserrichtung im zweiten Hauptabschnitt (12a) in Bezug auf eine Ebene (P) zwischen dem ersten Hauptabschnitt und dem zweiten Hauptabschnitt im Wesentlichen asymmetrisch sind, wobei die Ebene (P) durch einen Anfügungsabschnitt zwischen dem ersten Pressholzstück (11) und dem zweiten Pressholzstück (12) verläuft.

2. Gehäusestruktur aus Pressholz nach Anspruch 1, wobei die Holzfaserrichtung des ersten Hauptabschnitts (11a) im Wesentlichen orthogonal zur Holzfaserrichtung im zweiten Hauptabschnitt (12a) ist.

3. Gehäusestruktur (1) aus Pressholz nach Anspruch 1, wobei die Holzfaserrichtung im ersten Seitenabschnitt (11b, 11c, 11d, 11e) und die Holzfaserrichtung im zweiten Seitenabschnitt (12b, 12c, 12d, 12e) in Bezug auf die Ebene im Wesentlichen asymmetrisch sind.

4. Gehäusestruktur (1) aus Pressholz nach einem der Ansprüche 1 bis 3, wobei
ein Teil aus dem ersten und dem zweiten Pressholzstück (71; 72) als abnehmbare Einheit (91) ausgebildet ist, die abnehmbar an dem Pressholzstück (71; 72) befestigt ist, und
die Holzfaserrichtung der abnehmbaren Einheit im Wesentlichen mit der Holzfasserrichtung des Pressholzstücks (71; 72), an dem die abnehmbare Einheit (91) befestigt ist, übereinstimmt.

## Revendications

1. Structure de boîtier (1) en bois comprimé qui contient un objet prédéterminé entre une première pièce en bois comprimé (11) et une seconde pièce en bois comprimé (12), dans laquelle
la première pièce en bois comprimé (11) comprend une première partie principale (11a) formée selon une forme sensiblement carrée et une première partie latérale (11b, 11c, 11d, 11e) formée intégralement autour de quatre bords périphériques de la première partie principale (11a) et non parallèle à la première partie principale (11a),
la seconde pièce en bois comprimé (12) comprend une seconde partie principale (12a) formée selon une forme sensiblement carrée et une seconde partie latérale (12b, 12c, 12d, 12e) formée intégralement autour de quatre bords périphériques de la seconde partie principale (12a) et non parallèle à la seconde partie principale (12a), et
la direction de la fibre du bois dans la première partie principale (11a) et la direction de la fibre du bois dans la seconde partie principale (12a) sont sensiblement symétriques par rapport à un plan (P) entre la première partie principale et la seconde partie principale, le plan (P) s'étendant à travers une partie de joint entre la première pièce de bois comprimé (11) et la seconde pièce de bois comprimé (12).

2. Structure de boîtier en bois comprimé selon la revendication 1, dans laquelle la direction de la fibre du bois de la première partie principale (11a) est sensiblement orthogonale à la direction de la fibre du bois dans la seconde partie principale (12a).

3. Structure de boîtier (1) en bois comprimé selon la revendication 1, dans laquelle la direction de la fibre du bois dans la première partie latérale (11b, 11c, 11d, 11e) et la direction de la fibre du bois dans la seconde partie latérale (12b, 12c, 12d, 12e) sont sensiblement asymétriques par rapport au plan.

4. Structure de boîtier (1) en bois comprimé selon l'une quelconque des revendications 1 à 3, dans laquelle
une partie de la première et de la seconde pièces en bois comprimé (71, 72) est formée comme une unité détachable (91) montée sur cette pièce en bois comprimé (71, 72) ; et
la direction de la fibre du bois de l'unité détachable coïncide sensiblement avec la direction de la fibre en bois de cette pièce en bois comprimé (71, 72) sur laquelle l'unité détachable (91) est montée.
